# EUROPÄISCHE PATENTSCHRIFT

(11) **EP 2 178 725 B1**
(45) Veröffentlichungstag und Bekanntmachung des Hinweises auf die Patenterteilung: **21.03.2012**
(21) Anmeldenummer: 08760042.5
(22) Anmeldetag: 27.05.2008
(51) Int. Cl.: B60S 1/04, F16F 15/08

(54) **DÄMPFUNGSELEMENT**
DAMPING ELEMENT
ÉLÉMENT D'AMORTISSEMENT

(30) Priorität: 19.07.2007 DE 102007033683
(43) Veröffentlichungstag der Anmeldung: 28.04.2010
(73) Patentinhaber: Robert Bosch GmbH, 70442 Stuttgart (DE)
(72) Erfinder: REITH, Michael, 77815 Buehl-Vimbuch (DE); ALBRECHT, Gérard, F-67690 Hatten (FR)
(86) Internationale Anmeldenummer: PCT/EP2008/056444
(87) Internationale Veröffentlichungsnummer: WO 2009/010326

(56) Entgegenhaltungen:
- WO-A-2005/097564
- JP-A- 59 032 572

## Beschreibung

### Stand der Technik

Die Erfindung geht von einem Dämpfungselement nach dem Oberbegriff des Anspruchs 1 aus.

Aus der WO 2005/097564 A1 ist ein gattungsgemäßes Dämpfungselement bekannt. Es dient zum Befestigen eines Bauteils oder einer Baugruppe, z.B. eines Antriebselements für einen Scheibenwischer, der einen Elektromotor und ein Getriebe umfasst. Das Dämpfungselement ist mit einem Befestigungselement des Bauteils fest verbunden und besitzt etwa mittig einen Schlitz, in den ein Gleitblech eingesetzt ist. Das Gleitblech selbst besitzt zwei annähernd parallel zueinander verlaufende Schenkel, die zwischen sich einen Spalt bilden und an einem im Dämpfungselement liegenden Ende miteinander verbunden sind. Zum anderen Ende hin ist der Spalt offen, sodass das Gleitblech mit dem Dämpfungselement über ein Karosserieblech einer Fahrzeugkarosserie geschoben werden kann. Dies kann von einem Rand des Karosserieblechs oder von einer Öffnung in dem Karosserieblech geschehen, indem der Spalt des Gleitblechs über das Karosserieblech geschoben wird. Zum Spalt hin besitzt das Gleitblech Rastelemente, die in Aussparungen des Karosserieblechs eingreifen, und somit das Dämpfungselement und das Bauteil an der Karosserie in der Montageposition fixieren.

### Offenbarung der Erfindung

Nach der Erfindung besitzt das Gleitblech an seinem innen liegenden Ende mindestens eine zum Spalt führende Öffnung, durch die ein Vorsprung des Dämpfungselements in den Spalt ragt. Wird das Dämpfungselement mit einem Bauteil oder einer Baugruppe an ein Karosserieblech eines Kraftfahrzeugs montiert, liegt die dem Dämpfungselement zugeordnete Kante des Karosserieblechs spielfrei an dem Vorsprung an. Durch die Elastizität des Dämpfungselements wird das Spiel in Montagerichtung dauerhaft ausgeglichen, sodass eine mögliche Geräuschentstehung durch Erschütterungen oder Schwingungen wirkungsvoll verhindert wird.

Zur Verbesserung der Montage ist es vorteilhaft, dass die Schenkel des Gleitblechs an dem offenen Ende des Spalts divergieren und in etwa senkrecht zum Spalt verlaufende Flansche übergehen.

Das Gleitblech kann mit geeigneten Mitteln im Dämpfungselement gehalten werden, z.B. durch Einkleben, Vulkanisieren, Einspritzen oder durch Hinterschneidungen, die am geschlossenen Ende des Schlitzes vorgesehen sind, und in die das entsprechend angepasste Ende des Gleitblechs eingreift. Zum Befestigen des Bauteils bzw. der Baugruppe am Dämpfungselement ist es zweckmäßig, dass an den Stirnseiten des Gleitblechs Halter angebracht sind.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

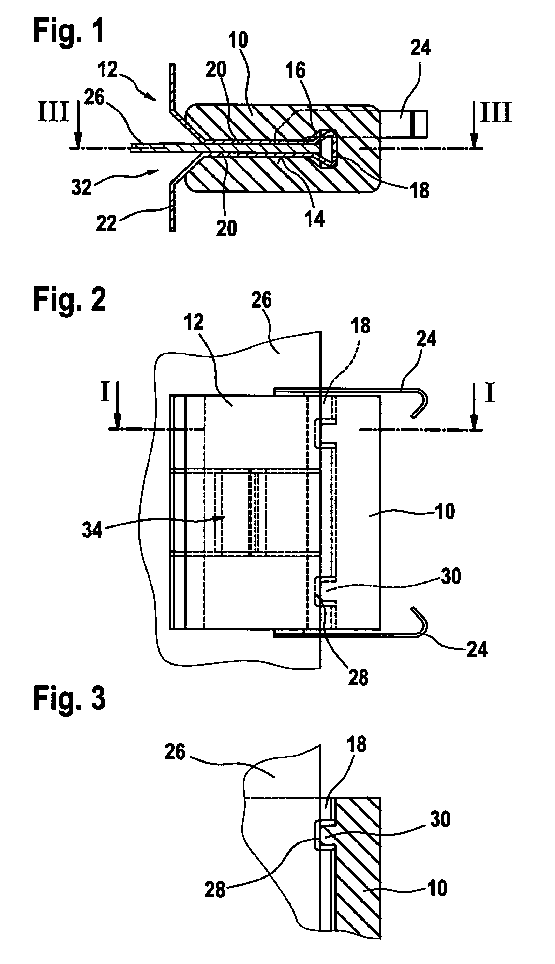

- Fig. 1: einen Schnitt durch ein erfindungsgemäßes Dämpfungselement entsprechend der Linie I-I in Fig. 2,
- Fig. 2: eine Ansicht eines am Fahrzeug montierten Dämpfungselements und
- Fig. 3: einen Teilschnitt entsprechend der Linie III-III in Fig. 1 .

### Ausführungsformen der Erfindung

Mit 10 ist ein Dämpfungselement bezeichnet, das etwa in der Mitte einen Schlitz 14 aufweist. In diesen ist ein Gleitblech 12 eingesetzt, das zwei im Wesentlichen parallel zueinander verlaufende Schenkel 20 besitzt. Die Schenkel 20 sind an dem in den Schlitz 14 weisenden Ende 18 miteinander verbunden und bilden an diesem Ende 18 eine Erweiterung, die einer Hinterschneidung 16 des Schlitzes 14 angepasst ist. Zum gegenüberliegenden Ende bilden die Schenkel 20 einen offenen Spalt 32, der im Endbereich zur leichteren Montage divergiert, wobei die Schenkel 20 im Endbereich in Flansche 22 übergehen, die etwa senkrecht zum Spalt 32 verlaufen.

An dem inneren geschlossenen Ende 18 des Spalts 32 sind an dem Gleitblech 12 bei dem gezeigten Ausführungsbeispiel zwei Öffnungen 28 vorgesehen, durch die Vorsprünge 30 des Dämpfungselements 10 ragen. Je nach Anwendung können mehrere Öffnungen 28 und Vorsprünge 30 vorgesehen werden oder nur eine Öffnung 28 mit einem Vorsprung 30, die sich dann über eine angemessene Länge des Gleitblechendes erstrecken. Bei der Montage wird das Dämpfungselement 10 mit dem Gleitblech 12 über ein Karosserieblech 26 einer nicht dargestellten Fahrzeugkarosserie geschoben, sodass das Karosserieblech 26 in den Spalt 32 gleitet und in seiner Endposition an den Vorsprüngen 30 des Dämpfungselements 10 spielfrei und gegebenenfalls mit einer gewissen Vorspannung anliegt. In dieser Position verrasten Rastelemente 34 des Gleitelements 10 mit Aussparungen oder Öffnungen im Karosserieblech 26, sodass das Dämpfungselement 10 in seiner Endposition spielfrei am Karosserieblech 26 gesichert ist. Halter 24, die stirnseitig am Gleitblech 12 angebracht sind, dienen zum Befestigen des Dämpfungselements 10 an einem Bauteil oder einer Baugruppe.

## Patentansprüche

1. Dämpfungselement (10) mit einem Gleitblech (12), das in einen Schlitz (14) des Dämpfungselements (10) eingesetzt und mit diesem fest verbunden ist sowie zwei im Wesentlichen parallel zueinander verlaufende Schenkel (20) aufweist, die an einem im Dämpfungselement (10) liegenden Ende (18) miteinander verbunden sind und zwischen sich einen Spalt (32) bilden, der zum gegenüberliegenden Ende offen ist, **dadurch gekennzeichnet, dass** das Gleitblech (12) an seinem innen liegenden Ende (18) mindestens eine zum Spalt (32) führende Öffnung (28) besitzt, durch die ein Vorsprung (30) des Dämpfungselements (10) in den Spalt (32) ragt.

2. Dämpfungselement (10) mit einem Gleitblech nach Anspruch 1, **dadurch gekennzeichnet, dass** die Schenkel (20) des Gleitblechs (12) an dem offenen Ende des Spalts (32) divergieren und in etwa senkrecht zum Spalt (32) verlaufende Flansche (22) übergehen.

3. Dämpfungselement (10) mit einem Gleitblech nach Anspruch 1 oder 2, **dadurch gekennzeichnet, dass** der Schlitz (14) an seinem geschlossenen Ende eine Hinterschneidung (16) bildet, in die das entsprechend angepasste Ende (18) des Gleitblechs (12) eingreift.

4. Dämpfungselement (10) mit einem Gleitblech nach einem der vorhergehenden Ansprüche, **dadurch gekennzeichnet, dass** stirnseitig an den Schenkeln (20) des Gleitblechs (12) Halter (24) angebracht sind.

## Claims

1. Damping element (10) with a sliding plate (12) which is inserted into a slot (14) of the damping element (10) and is firmly connected to the latter and also has two legs (20) which run essentially parallel to one another and which are connected to one another at an end (18) inside the damping element (10) and between them form a gap (32) which is open towards the opposite end, **characterized in that** the sliding plate (12) possesses at its inner end (18) at least one orifice (28) which leads to the gap (32) and through which a projection (30) of the damping element (10) projects into the gap (32).

2. Damping element (10) with a sliding plate according to Claim 1, **characterized in that** the legs (20) of the sliding plate (12) diverge at the open end of the gap (32) and merge into flanges (22) running approximately perpendicularly with respect to the gap (32).

3. Damping element (10) with a sliding plate according to Claim 1 or 2, **characterized in that** the slot (14) forms at its closed end an undercut (16) into which the correspondingly adapted end (18) of the sliding plate (12) engages.

4. Damping element (10) with a sliding plate according to one of the preceding claims, **characterized in that** holders (24) are formed on the legs (20) of the sliding plate (12) at the end face.

## Revendications

1. Elément d'amortissement (10) comprenant une tôle de glissement (12), qui est insérée dans un fente (14) de l'élément d'amortissement et qui est connectée fixement à celui-ci ainsi que deux branches (20) s'étendant essentiellement parallèlement l'une à l'autre, qui sont connectées l'une à l'autre au niveau d'une extrémité (18) située dans l'élément d'amortissement (10) et qui forment entre elles un interstice (32), qui est ouvert vers l'extrémité opposée, **caractérisé en ce que** la tôle de glissement (12) possède à son extrémité (18) située à l'intérieur au moins une ouverture (28) conduisant vers l'interstice (32), à travers laquelle une saillie (30) de l'élément d'amortissement (10) pénètre dans l'interstice (32).

2. Elément d'amortissement (10) comprenant une tôle de glissement selon la revendication 1, **caractérisé en ce que** les branches (20) de la tôle de glissement (12) à l'extrémité ouverte de l'interstice (32) divergent et se prolongent dans des brides (22) s'étendant approximativement perpendiculairement à l'interstice (32).

3. Elément d'amortissement (10) comprenant une tôle de glissement selon la revendication 1 ou 2, **caractérisé en ce que** la fente (14) forme à son extrémité fermée une contre-dépouille (16), dans laquelle s'engage l'extrémité (18) adaptée correspondante de la tôle de glissement (12).

4. Elément d'amortissement (10) comprenant une tôle de glissement selon l'une quelconque des revendications précédentes, **caractérisé en ce que** du côté frontal sur les branches (20) de la tôle de glissement (12) sont montés des éléments de fixation (24).
